(19) Europäisches Patentamt / European Patent Office / Office européen des brevets

(11) EP 4 564 962 A1

(12) **EUROPEAN PATENT APPLICATION**
published in accordance with Art. 153(4) EPC

(43) Date of publication:
04.06.2025 Bulletin 2025/23

(21) Application number: 23848992.6

(22) Date of filing: 17.05.2023

(51) International Patent Classification (IPC):
*H04W 72/04* (2023.01)

(52) Cooperative Patent Classification (CPC):
**H04B 7/185; H04W 72/04; H04W 72/23;
H04W 76/27**

(86) International application number:
**PCT/CN2023/094897**

(87) International publication number:
**WO 2024/027282 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 01.08.2022 CN 202210916931

(71) Applicant: Huawei Technologies Co., Ltd.
Shenzhen, Guangdong 518129 (CN)

(72) Inventors:
• SHI, Meng
Shenzhen, Guangdong 518129 (CN)
• ZHANG, Jiayin
Shenzhen, Guangdong 518129 (CN)

(74) Representative: **Maiwald GmbH
Engineering
Elisenhof
Elisenstrasse 3
80335 München (DE)**

(54) **COMMUNICATION METHOD AND APPARATUS, AND DEVICE AND STORAGE MEDIUM**

(57)    This application provides a communication method, apparatus, and device, and a storage medium. The method includes: A terminal device receives a radio resource control RRC setup message from a network device. The RRC setup message includes a first parameter and first information. The first information is for configuring a scheduling-free uplink resource, and the first parameter is for determining valid duration of the scheduling-free uplink resource. The terminal device sends an RRC setup complete message to the network device on the scheduling-free uplink resource within the valid duration. In this way, scheduling-free transmission in an initial access phase is implemented, signaling overheads are reduced, and an initial access delay is reduced.

200

Terminal device                           Network device

S210: Send an RRC setup message, where the RRC setup message includes a first parameter and first information, the first information is for configuring a scheduling-free uplink resource, and the first parameter is for determining valid duration of the scheduling-free uplink resource

S220: Send an RRC setup complete message on the scheduling-free uplink resource within the valid duration

FIG. 4

## Description

This application claims priority to Chinese Patent Application No. 202210916931.0, filed with the China National Intellectual Property Administration on August 1, 2022 and entitled "COMMUNICATION METHOD, APPARATUS, AND DEVICE, AND STORAGE MEDIUM", which is incorporated herein by reference in its entirety.

## TECHNICAL FIELD

This application relates to the field of communication technologies, and in particular, to a communication method, apparatus, and device, and a storage medium.

## BACKGROUND

Currently, in some communication systems, for example, in a 5th generation (5th generation, 5G) mobile communication system, communication may be implemented through connection to a satellite via a non-terrestrial network (Non-Terrestrial Network, NTN).

In an initial access phase in which a terminal device is connected to the satellite, when the terminal device transmits uplink information, for example, a radio resource control (radio resource control, RRC) setup complete message (msg5), authentication NAS signaling, a capability reporting message, or security mode signaling, for each piece of uplink information and each repetition of uplink transmission information, uplink resource scheduling needs to be implemented based on a plurality of times of signaling exchange. Consequently, signaling overheads are inevitably high, and an initial access delay is increased.

## SUMMARY

Embodiments of this application provide a communication method, apparatus, and device, and a storage medium, to reduce signaling overheads in an initial access phase and reduce an initial access delay.

According to a first aspect, an embodiment of this application provides a communication method. The method includes: A terminal device receives a radio resource control RRC setup message from a network device. The RRC setup message includes a first parameter and first information. The first information is for configuring a scheduling-free uplink resource, and the first parameter is for determining valid duration of the scheduling-free uplink resource. The terminal device sends an RRC setup complete message to the network device on the scheduling-free uplink resource within the valid duration.

According to the communication method provided in the first aspect, the network device and the terminal device transmit the RRC setup complete message on the scheduling-free uplink resource within the valid duration, so that scheduling-free transmission during RRC setup is implemented, scheduling for uplink transmission RRC signaling through a plurality of times of signaling exchange is avoided, and signaling overheads and an RRC setup delay are reduced.

In a possible implementation, the network device is accessed via the RRC setup complete message, and the method further includes: The terminal device performs one or a combination of the following on the scheduling-free uplink resource within the valid duration: a capability reporting process; and a security authentication and verification process.

According to the communication method provided in this implementation, scheduling-free transmission in any process in an initial access phase is implemented, scheduling through a plurality of times of signaling exchange is avoided during uplink transmission, and the signaling overheads and the initial access delay are further reduced.

In a possible implementation, the first parameter includes the valid duration.

According to the communication method provided in this implementation, the first parameter directly indicates the valid duration, so that processing efficiency of the terminal device is improved, and the initial access delay is reduced.

In a possible implementation, the first information includes a transmission periodicity of the scheduling-free uplink resource, and the first parameter includes a valid quantity of transmission periodicities.

According to the communication method provided in this implementation, the first parameter indicates the valid quantity of transmission periodicities, so that there is a complete transmission periodicity in the configured valid duration.

In a possible implementation, before the terminal device receives the RRC setup message from the network device, the method further includes: The terminal device sends a preamble sequence to the network device. The preamble sequence is used by the terminal device to request uplink enhancement.

According to the communication method provided in this implementation, the preamble sequence sent by the terminal device is used to request uplink enhancement, to avoid a need to request uplink enhancement by using signaling, reducing signaling overheads.

In a possible implementation, before the terminal device receives the RRC setup message from the network device, the method further includes: The terminal device sends a preamble sequence to the network device on a physical random access channel PRACH resource. The PRACH resource is used by the terminal device to request uplink enhancement.

According to the communication method provided in this implementation, the PRACH resource selected by the terminal device when sending the preamble sequence is used to request uplink enhancement, to avoid a need to request uplink enhancement by using signaling, reducing signaling overheads.

In a possible implementation, before the terminal device receives the RRC setup message from the network device, the method further includes: The terminal device sends an RRC setup request to the network device. The RRC setup request includes an enhancement indication field, and the enhancement indication field is used by the terminal device to request uplink enhancement.

According to the communication method provided in this implementation, the enhancement indication field in the RRC setup request sent by the terminal device is used to request uplink enhancement. Compared with the case in which the resource or the preamble sequence is selected to request uplink enhancement, this reduces complexity of processing by the terminal device.

In a possible implementation, that the terminal device sends the RRC setup complete message to the network device on the scheduling-free uplink resource within the valid duration includes: The terminal device sends the RRC setup complete message to the network device on the scheduling-free uplink resource within the valid duration from a start of the valid duration. The start of the valid duration is physical layer receive time of the RRC setup message; or the start of the valid duration is receive time of downlink control information DCI. The DCI is for activating the scheduling-free uplink resource.

According to the communication method provided in this implementation, when receiving uplink enhancement configuration information, the terminal device may start to send a PUSCH to the network device on the scheduling-free uplink resource. The DCI may no longer be used to trigger the terminal device to send the PUSCH in a scheduling-free manner, thereby reducing signaling overheads. Alternatively, the scheduling-free uplink resource is activated by using the DCI, to trigger the terminal device to start to send the PUSCH to the network device on the scheduling-free uplink resource within the valid duration. This prevents the terminal device from always starting scheduling-free uplink transmission after receiving the uplink enhancement configuration information, improving transmission control flexibility.

In a possible implementation, the RRC setup complete message is transmitted in a form of a transport block processing over multiple slots TBoMS, and that the terminal device sends the RRC setup complete message to the network device on the scheduling-free uplink resource within the valid duration includes: The terminal device sends the RRC setup complete message to the network device one or more times on the scheduling-free uplink resource within the valid duration.

According to the communication method provided in this implementation, transmission is performed in the form of the TBoMS, so that the RRC setup message with large load is transmitted, and is not segmented at a MAC layer, thereby avoiding increasing overheads of a packet header when the PUSCH is transmitted.

In a possible implementation, the RRC setup complete message is segmented at a media access control MAC layer to obtain a plurality of TBs, and is transmitted in a form of the plurality of TBs, and that the terminal device sends the RRC setup complete message to the network device on the scheduling-free uplink resource within the valid duration includes: The terminal device sends the RRC setup complete message to the network device one or more times on the scheduling-free uplink resource within the valid duration.

According to the communication method provided in this implementation, transmission is performed in the form of the plurality of TBs, so that the RRC setup message with large load is transmitted.

According to a second aspect, an embodiment of this application provides a communication method. The method includes: A network device sends an RRC setup message to a terminal device. The RRC setup message includes a first parameter and first information. The first information is for configuring a scheduling-free uplink resource, and the first parameter is for determining valid duration of the scheduling-free uplink resource. The network device receives an RRC setup complete message from the terminal device on the scheduling-free uplink resource within the valid duration.

In a possible implementation, access by the terminal device is enabled via the RRC setup complete message, and the method further includes: The network device performs one or a combination of the following on the scheduling-free uplink resource within the valid duration: a capability reporting process; and a security authentication and verification process.

In a possible implementation, the first parameter includes the valid duration.

In a possible implementation, the first information includes a transmission periodicity of the scheduling-free uplink resource, and the first parameter includes a valid quantity of transmission periodicities.

In a possible implementation, before the network device sends the RRC setup message to the terminal device, the method further includes: The network device receives a preamble sequence from the network device. The preamble sequence is used by the terminal device to request uplink enhancement.

In a possible implementation, before the network device sends the RRC setup message to the terminal device, the method further includes: The network device receives a preamble sequence from the terminal device on a PRACH resource. The PRACH resource is used by the terminal device to request uplink enhancement.

In a possible implementation, before the network device sends the RRC setup message to the terminal device, the method further includes: The network device receives the RRC setup request from the terminal device. The RRC setup request includes an enhancement indication field, and the enhancement indication field is used by the terminal device to request uplink enhancement.

In a possible implementation, before the network device sends the RRC setup message to the terminal device, the method further includes: The network device determines, based on at least one of the following, that the terminal device requests uplink enhancement: an uplink enhancement request of an RRC setup request; and uplink enhancement transmission of the RRC setup request.

In a possible implementation, that the network device receives the RRC setup complete message from the terminal device on the scheduling-free uplink resource within the valid duration includes: The network device receives the RRC setup complete message from the terminal device on the scheduling-free uplink resource within the valid duration from a start of the valid duration. The start of the valid duration is physical layer receive time of the RRC setup message, or the start of the valid duration is receive time of DCI. The DCI is for activating the scheduling-free uplink resource.

In a possible implementation, the RRC setup complete message is transmitted in a form of a TBoMS, and that the network device receives the RRC setup complete message from the terminal device on the scheduling-free uplink resource within the valid duration includes: The network device receives, on the scheduling-free uplink resource within the valid duration, the RRC setup complete message sent by the terminal device one or more times.

In a possible implementation, the RRC setup complete message is segmented at a media access control MAC layer to obtain a plurality of TBs, and is transmitted in a form of the plurality of TBs, and that the network device receives the RRC setup complete message from the terminal device on the scheduling-free uplink resource within the valid duration includes: The network device receives, on the scheduling-free uplink resource within the valid duration, the RRC setup complete message sent by the terminal device one or more times.

For beneficial effects of the communication method provided in the second aspect and the possible implementations of the second aspect, refer to the beneficial effects brought by the first aspect and the possible implementations of the first aspect. Details are not described herein again.

According to a third aspect, an embodiment of this application provides a communication method. The method includes: A terminal device receives a capability query request from a network device. The capability query request includes a first parameter and first information. The first information is for configuring a scheduling-free uplink resource, and the first parameter is for determining valid duration of the scheduling-free uplink resource. The terminal device sends capability reporting information to the network device on the scheduling-free uplink resource within the valid duration.

In a possible implementation, the first parameter includes the valid duration.

In a possible implementation, the first information includes a transmission periodicity of the scheduling-free uplink resource, and the first parameter includes a valid quantity of transmission periodicities of the scheduling-free uplink resource.

For beneficial effects of the communication method provided in the third aspect and the possible implementations of the third aspect, refer to the beneficial effects brought by the first aspect and the possible implementations of the first aspect. Details are not described herein again.

According to a fourth aspect, an embodiment of this application provides a communication method. The method includes: A network device sends a capability query request to a terminal device. The capability query request includes a first parameter and first information. The first information is for configuring a scheduling-free uplink resource, and the first parameter is for determining valid duration of the scheduling-free uplink resource. The network device receives capability reporting information from the terminal device on the scheduling-free uplink resource within the valid duration.

In a possible implementation, the first parameter includes the valid duration.

In a possible implementation, the first information includes a transmission periodicity of the scheduling-free uplink resource, and the first parameter includes a valid quantity of transmission periodicities of the scheduling-free uplink resource.

For beneficial effects of the communication method provided in the fourth aspect and the possible implementations of the fourth aspect, refer to the beneficial effects brought by the first aspect and the possible implementations of the first aspect. Details are not described herein again.

According to a fifth aspect, an embodiment of this application provides a communication apparatus, including modules configured to perform the method according to the first aspect, the third aspect, or the possible implementations of the first aspect or the third aspect, or including modules configured to perform the method according to the second aspect, the fourth aspect, or the possible implementations of the second aspect or the fourth aspect.

For beneficial effects of the communication apparatus provided in the fifth aspect and the possible implementations of the fifth aspect, refer to the beneficial effects brought by the first aspect and the possible implementations of the first aspect. Details are not described herein again.

According to a sixth aspect, an embodiment of this application provides a chip, including a processor, configured to invoke computer instructions from a memory and run the computer instructions, to enable a device in which the chip is installed to perform the method according to the first aspect, the second aspect, the third aspect, the fourth aspect, or the possible implementations of the first aspect, the second aspect, the third aspect, or the fourth aspect.

According to a seventh aspect, an embodiment of this application provides a computer-readable storage medium, configured to store computer program instructions. The computer program enables a computer to perform the method according to the first aspect, the second aspect, the third aspect, the fourth aspect, or the possible implementations of the first aspect, the second aspect, the third aspect, or the fourth aspect.

According to an eighth aspect, an embodiment of this application provides a computer program product, including computer program instructions. The computer program instructions enable a computer to perform the method according to the first aspect, the second aspect, the third aspect, the fourth aspect, or the possible implementations of the first aspect, the second aspect, the third aspect, or the fourth aspect.

According to a ninth aspect, an embodiment of this application provides a communication device, including: a processor and a memory. The memory is configured to store a computer program, and the processor is configured to invoke and run the computer program stored in the memory, to perform the method according to the first aspect, the second aspect, the third aspect, the fourth aspect, or the possible implementations of the first aspect, the second aspect, the third aspect, or the fourth aspect.

According to a tenth aspect, an embodiment of this application provides a chip, including a processor, configured to invoke computer instructions from a memory and run the computer instructions, to enable a device in which the chip is installed to perform the method according to the first aspect, the second aspect, the third aspect, the fourth aspect, or the possible implementations of the first aspect, the second aspect, the third aspect, or the fourth aspect.

According to an eleventh aspect, an embodiment of this application provides a computer-readable storage medium, configured to store computer program instructions. The computer program enables a computer to perform the method according to the first aspect, the second aspect, the third aspect, the fourth aspect, or the possible implementations of the first aspect, the second aspect, the third aspect, or the fourth aspect.

According to a twelfth aspect, an embodiment of this application provides a computer program product, including computer program instructions. The computer program instructions enable a computer to perform the method according to the first aspect, the second aspect, the third aspect, the fourth aspect, or the possible implementations of the first aspect, the second aspect, the third aspect, or the fourth aspect.

According to a thirteenth aspect, an embodiment of this application provides an apparatus, including a logic circuit and an input/output interface. The input/output interface is configured to receive a signal from another communication apparatus than the apparatus and transmit the signal to the logic circuit, or send a signal from the logic circuit to another communication apparatus than the apparatus. The logic circuit is configured to execute code instructions to implement the method according to the first aspect, the second aspect, the third aspect, the fourth aspect, or the possible implementations of the first aspect, the second aspect, the third aspect, or the fourth aspect.

**BRIEF DESCRIPTION OF DRAWINGS**

FIG. 1 is a diagram of an architecture of a mobile communication system to which an embodiment of this application is applied;
FIG. 2 is a schematic flowchart of initial access according to an embodiment of this application;
FIG. 3 is a diagram of a transport block processing over multiple slots according to an embodiment of this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8a is a diagram of an uplink transmission mode according to an embodiment of this application;
FIG. 8b is a diagram of an uplink transmission mode according to an embodiment of this application;
FIG. 8c is a diagram of an uplink transmission mode according to an embodiment of this application;
FIG. 9a is a schematic flowchart of a communication method according to an embodiment of this application;
FIG. 9b is a schematic flowchart of a communication method according to an embodiment of this application;
FIG. 9c is a schematic flowchart of a communication method according to an embodiment of this application;
FIG. 9d is a schematic flowchart of a communication method according to an embodiment of this application;
FIG. 10 is a block diagram of a communication apparatus according to an embodiment of this application; and
FIG. 11 is another block diagram of a communication apparatus according to an embodiment of this application.

## DESCRIPTION OF EMBODIMENTS

The following describes technical solutions of this application with reference to accompanying drawings.

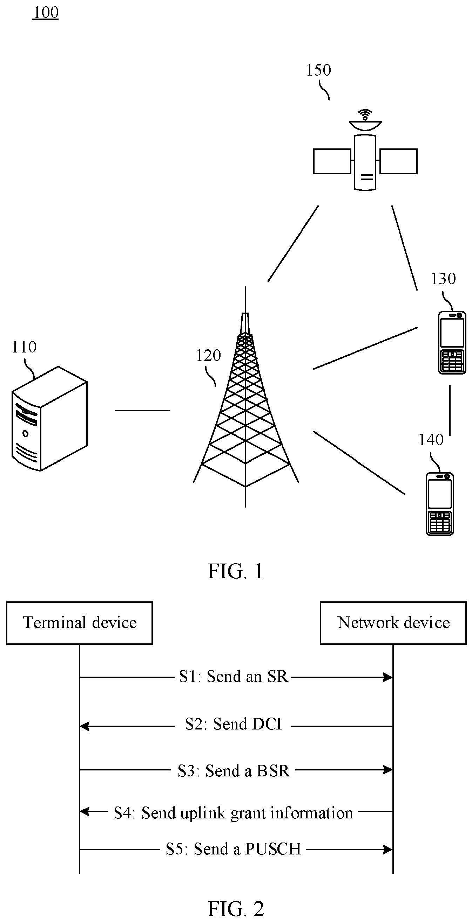

FIG. 1 is a diagram of an architecture of a mobile communication system to which an embodiment of this application is applied. As shown in FIG. 1, the mobile communication system 100 includes a core network device 110, a base station 120, and at least one terminal device (for example, a terminal device 130 and a terminal device 140 in FIG. 1). The terminal device is connected to the base station in a wireless manner. As a network device, the base station is connected to the core network device in a wireless or wired manner. The core network device and the base station may be different independent physical devices, or a function of the core network device and a logical function of the base station may be integrated on a same physical device, or a physical device integrates some functions of the core network device and some functions of the base station. The terminal device may be located at a fixed position, or may be mobile. In addition, the communication system may further include another network device, for example, may further include a wireless relay device and a wireless backhaul device, which are not shown in FIG. 1. Quantities of core network devices, base stations, and terminal devices included in the mobile communication system are not limited in embodiments of this application.

As shown in FIG. 1, the communication system 100 may further include a satellite 150. In an example, wireless communication may be performed between the terminal device 130 and the satellite 150. A network formed between the terminal device 130 and the satellite 150 may also be referred to as an NTN. The satellite 150 has a function of a base station, direct communication may be performed between the terminal device 130 and the satellite 150, and the satellite 150 may be referred to as a network device. In another example, wireless communication may be performed between the terminal device 130, the satellite 150, and the base station 120, and communication may be performed between the satellite 150 and the base station 120. A network formed between the terminal device 130, the satellite 150, and the base station 120 is referred to as an NTN. Communication between the terminal device 130 and the base station 120 needs to be performed through relay of the satellite 150. In this case, the satellite 150 does not have a function of the base station, and the base station 120 is referred to as a network device.

The network device is an access device through which the terminal device accesses the mobile communication system in a wireless manner, and may be a base station, for example, a NodeB, an evolved base station like an evolved NodeB eNodeB, a base station in a new radio access technology (new radio access technology, NR) mobile communication system, a base station in a future mobile communication system, or an access node in a Wi-Fi system. The network device may provide a service for the terminal device in a form in which a central unit (central unit, CU) and a distributed unit (distributed unit, DU) are separated. A specific technology and a specific device form that are used for the network device are not limited in embodiments of this application.

The terminal device may also be referred to as a terminal Terminal, user equipment (user equipment, UE), a mobile station (mobile station, MS), a mobile terminal (mobile terminal, MT), or the like. The terminal device may be a mobile phone (mobile phone), a pad (Pad), a computer having a wireless receiving and transmitting function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The network device and the terminal device may be deployed on the land, including an indoor device, an outdoor device, a handheld device, or a vehicle-mounted device; may be deployed on the water; or may be deployed on an airplane, a balloon, or a satellite in the air. An application scenario of the network device and the terminal device is not limited in embodiments of this application.

Communication between the network device and the terminal device and communication between terminal devices may be performed by using a licensed spectrum (licensed spectrum), an unlicensed spectrum (unlicensed spectrum), or both the licensed spectrum and the unlicensed spectrum. A spectrum below 6 G, a spectrum at or above 6 G, or both a spectrum below 6 G and a spectrum at or above 6 G may be used for communication between the network device and the terminal device and communication between the terminal devices. A spectrum resource used between the network device and the terminal device is not limited in embodiments of this application.

It should be understood that specific forms of the network device and the terminal device are not limited in this application.

A communication method provided in this application may be applied to various communication systems, for example, a satellite communication system, a long term evolution (Long Term Evolution, LTE) system, a 5th generation (5th Generation, 5G) mobile communication system, and a future 6th generation (6th Generation, 6G) mobile communication system.

In any one of the foregoing communication systems, an initial access phase mainly includes: 1. a random access process; 2. a security authentication and verification process; 3. a capability reporting process; and 4. transmission parameter configuration.

1. Random access process: The random access process generally includes a two-step random access process and a four-step random access process. In a contention-based four-step random access process, a message (msg) 1 to a msg4 are transmitted. The msg1 is one or more preambles sent by the terminal device to the network device. The msg2 is a random access response sent by the network device to the terminal device. The msg3 is a radio resource control (radio resource control, RRC) setup request (for example, RRCSetupRequest or RRC_SETUP_REQ) sent by the terminal device to the network device. The msg4 is an RRC setup message (for example, RRC_SETUP or RRCSetup) sent by the network device to the terminal device.

After contention of the random access is resolved, the terminal device may send a msg5, namely, an RRC setup complete message (for example, RRC_SETUP_CMP or RRC_Setup_Complete), to the network device.

In the random access process, a process in which the terminal device switches from an RRC idle (idle) state to an RCC connected (connected) state can be implemented.

2. Security authentication and verification process: The security authentication and verification process is a process in which the network device and the terminal device implement identity identification and authentication through non-access stratum (non-access stratum, NAS) signaling exchange. The security authentication and verification process includes, but is not limited to, an RRC uplink direct transfer message (RRC_UL_INFO_TRANSF), an RRC downlink direct transfer message (RRC_DL_INFO_TRANSF), an RRC security mode start message (RRC_SECUR_MODE_CMD), and an RRC security mode complete message (RRC_SECUR_MODE_CMP).

3. Capability reporting process: The network device may send a capability query request (for example, RRC_UE_CAP_ENQUIRY) to the terminal device, and after receiving the capability query request, the terminal device may send a capability reporting message (for example, RRC_UE_CAP_INFO) to the network device.

4. Transmission parameter configuration: The network device (for example, a base station) may transparently transmit a capability of the terminal device to an access and mobility management function (access and mobility management function, AMF), and send an RRC resetup message (for example, RRC_RECFG) to the terminal device, to indicate the terminal device to establish a signaling radio bearer (Signaling Radio Bearer, SRB) 2 and a data radio bearer (data radio bearer, DRB). The terminal device establishes a corresponding packet data convergence protocol (packet data convergence protocol, PDCP) entity, configures a related security parameter, and sends an RRC resetup complete message (for example, RRC_RECFG_CMP) to the network device.

In the foregoing initial access phase of the terminal device, before the terminal device performs capability reporting, uplink transmission can be implemented only through a plurality of signaling exchange processes between the terminal device and the network device. For example, an uplink transmission process may include S1 to S5 shown in FIG. 2. S1: The terminal device sends a scheduling request (scheduling request, SR) to the network device. S2: The network device sends downlink control information (downlink control information, DCI) to the terminal device. S3: The terminal device sends a buffer status report (buffer status report, BSR) to the network device. S4: The network device sends uplink grant information (UL grant) to the terminal device. S5: The terminal device sends a physical uplink shared channel (physical uplink shared channel, PUSCH) to the network device. The PUSCH may include, but is not limited to, one of the following: an RRC setup complete message (msg5), authentication NAS signaling, a capability reporting message, and security mode signaling.

Each time the terminal device sends the PUSCH to the network device, the signaling exchange process shown in FIG. 2 is implemented. Consequently, signaling overheads are inevitably high, and an initial access delay is increased.

In any one of the foregoing communication systems, in the initial access phase of the terminal device, an uplink and downlink channel link budget is limited. For example, a C-band (C-band) is used as a transmission frequency band for satellite communication. According to the IEEE 501-2002 standard, the C-band is a radio wave band whose frequency ranges from 4 GHz to 8 GHz, where generally, an uplink frequency range is 5.925 GHz to 6.425 GHz, and a downlink frequency range is 3.7 GHz to 4.2 GHz. Due to a limitation of the uplink and downlink channel link budget, the PUSCH needs to be transmitted by segments and transmitted repeatedly. This increases a quantity of times that the terminal device sends the PUSCH. In addition, each time of segmented transmission or retransmission of the PUSCH needs to be indicated by DCI. This further increases the signaling overheads, affects a system capacity, and increases the initial access delay.

In view of the problem of high signaling overheads in the initial access phase, which affects the system capacity and increases the initial access delay, in an initial access solution provided in embodiments of this application, a "scheduling-free uplink resource" is introduced, and a PUSCH (for example, at least one of an RRC setup complete message, authentication NAS signaling, a capability reporting message, and security mode signaling) is transmitted on a scheduling-free uplink resource within valid duration. In this way, scheduling-free transmission in the initial access phase is implemented, the signaling overheads are reduced, the system capacity is further improved, and the initial access delay is further reduced.

It should be noted that the scheduling-free solution for uplink transmission provided in embodiments of this application is described by using an example in which the scheduling-free solution is applied to an initial access phase. However, this is not limited. For example, this application is also applicable to an RRC connection resume phase, namely, a process in which a terminal device is triggered to switch from an RRC inactive (inactive) state to an RRC connected (connected) state. When embodiments of this application are applied to the RRC connection resume phase, an RRC setup message in the initial access phase may be replaced with an RRC resume message, an RRC setup complete message may be replaced with an uplink message in the RRC connection resume phase, for example, an RRC resume complete message, and an RRC setup request may be replaced with an RRC resume request. For specific implementations and beneficial effects of scheduling-free for an uplink message like the RRC resume complete message in the RRC connection resume phase, refer to the descriptions of the implementations in the initial access phase. For brevity, details are not described again.

For ease of understanding embodiments of this application, a transport block processing over multiple slots (TB processing over multiple slots, TBoMS) involved in this application is first briefly described.

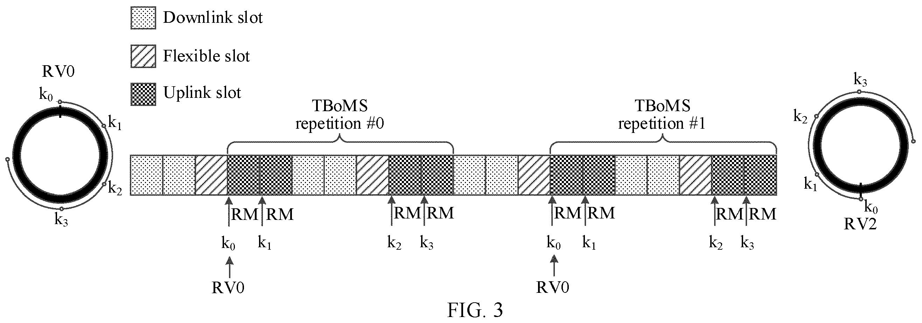

The TBoMS may occupy a plurality of slots (slots) for transmission, and the TBoMS can support repeated transmission. With reference to FIG. 3, a repetition quantity M is 2, and four slots ($N_s$=4) may be occupied in single transmission of a TBoMS repetition, where

a transmission symbol of uplink control information (uplink control information, UCI) may be inserted into four uplink slots occupied by a TBoMS repetition (repetition) #0 in two repeatedly transmitted TBoMSs.

A transport block size (transport block size, TBS) $N_{info}$ of the TBoMS may satisfy the following formula (1):

$$N_{info}=N_s \cdot N_{RE} \cdot R \cdot Q_m \cdot v \qquad (1)$$

$N_s$ is a quantity of slots occupied for TBoMS transmission, $N_{RE}$ is a quantity of RE resources scheduled in each slot, $R$ is a bit rate, $Q_m$ is a modulation order, and v is a quantity of transmission layers.

Data obtained through channel coding of the TBoMS is stored in a ring buffer, and a redundant version (Redundant Version, RV) indicates a location (for example, locations $k_0$ to $k_3$ in FIG. 3) from which the data is read in the ring buffer.

The TBoMS may support rate matching (Rate Matching, RM) after coding, to satisfy a quantity of bits that can be transmitted on a transmission physical channel.

Optionally, the repetition quantity M may be indicated by higher layer signaling.

For ease of understanding of embodiments of this application, the following several descriptions are provided.

First, a PUSCH, a physical random access channel (physical random access channel, PRACH), a physical downlink control channel (physical downlink control channel, PDCCH), and the like involved in embodiments of this application may be understood as physical resources, or may be understood as data, signaling, or the like transmitted through these resources. For example, that the terminal device sends data through a PUSCH may also be expressed as that the terminal device sends the PUSCH; that the terminal device sends control information such as DCI through a PDCCH may also be expressed as that the terminal device sends the PDCCH; and that the terminal device sends a preamble (preamble) through a PRACH may also be expressed as that the terminal device sends the PRACH. A person skilled in the art can understand the meaning.

Second, "predefinition" may be implemented by prestoring corresponding code or a corresponding table in a device (for example, including a terminal device and a network device), or may be implemented in another manner that may indicate related information. A specific implementation thereof is not limited in this application.

"Preconfiguration" may be implemented by prestoring corresponding code or a corresponding table in a device (for example, including a terminal device and a network device), or may be implemented in another manner that may indicate related information, or may be implemented by using signaling preconfiguration. For example, a network device is implemented by using signaling preconfiguration. A specific implementation of the preconfiguration is not limited in this application.

Third, a "protocol" involved in embodiments of this application may be a standard protocol in the communication field, for example, including an LTE protocol, an NR protocol, and a related protocol used in a future communication system. This is not limited in this application.

Fourth, in embodiments of this application, "a plurality of" means two or more. For example, a plurality of transport blocks (transport blocks, TBs) means two or more TBs.

The following describes a communication method in embodiments of this application with reference to the accompanying drawings.

It should be understood that, merely for ease of understanding and description, the following mainly uses interaction between a network device and a terminal device as an example to describe the method provided in embodiments of this application. The terminal device may be, for example, any terminal device in the communication system shown in FIG. 1, for example, the terminal device 130 or the terminal device 140. The network device may be the satellite 150 in the communication system shown in FIG. 1. For example, when the satellite has a function of a base station, wireless communication may be performed between the terminal device 130 and the satellite 150; or when the satellite does not have a function of a base station, communication between the terminal device 130 and the base station 120 is performed through relay of the satellite 150.

However, it should be understood that this should not constitute any limitation on an execution body of the method provided in this application. Provided that an execution body can perform the method provided in embodiments of this application by running a program with code of the method provided in embodiments of this application, the execution body can be used as an execution body of the method provided in embodiments of this application. For example, a terminal device shown in the following embodiments may alternatively be replaced with a component in the terminal device, for example, a chip, a chip system, or another functional module that can invoke and execute a program; and a network device may alternatively be replaced with a component in the network device, for example, a chip, a chip system, or another functional module that can invoke and execute a program.

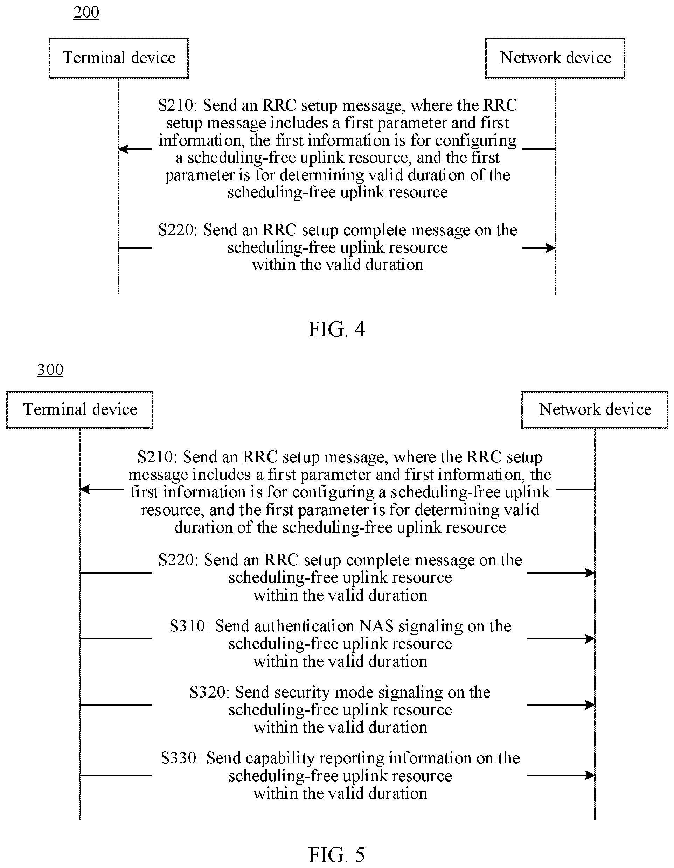

FIG. 4 is a schematic flowchart of a communication method 200 according to an embodiment of this application. As shown in FIG. 4, the method 200 may include the following S210 and S220. The following describes steps in the method 200.

S210: A network device sends an RRC setup message to a terminal device, where the RRC setup message includes a first parameter and first information, the first information is for configuring a scheduling-free uplink resource, and the first parameter is for determining valid duration (valid duration) of the scheduling-free uplink resource.

Correspondingly, the terminal device receives the RRC setup message from the network device.

S220: The terminal device sends an RRC setup complete message to the network device on the scheduling-free uplink resource within the valid duration.

Correspondingly, the network device receives the RRC setup complete message from the terminal device on the scheduling-free uplink resource within the valid duration.

It should be noted that the first parameter may limit valid time of the uplink resource configured by using the first information. In this way, the terminal device performs, within the valid duration, scheduling-free uplink transmission on the uplink resource configured by using the first information, and invalidates the scheduling-free uplink resource after the valid duration, so that the uplink resource may be configured for another terminal device or used to implement another information transmission process.

Optionally, the first information may include, but is not limited to, some or all of the following: a modulation and coding scheme (modulation and coding scheme, MCS), a transmission periodicity, a time domain resource allocation (time domain resource allocation, TDRA), a frequency domain resource allocation (frequency domain resource allocation, FDRA), and a repetition quantity.

In a first example, the first parameter may include the valid duration, or include information indicating the valid duration. The valid duration may be a configured specific time length, and a granularity (or a minimum unit) of the valid duration may be a symbol, a slot, a system frame, a millisecond, a second, or the like. This is not limited in this application.

In a second example, the first parameter may be a valid quantity of transmission periodicities. In this case, the first information may include the transmission periodicity of the scheduling-free uplink resource. Certainly, this application does not exclude a case in which the transmission periodicity of the scheduling-free uplink resource is indicated by other information, or a case in which the transmission periodicity of the scheduling-free uplink resource is defined in a protocol. The terminal device may determine the valid duration based on the transmission periodicity of the scheduling-free uplink resource and the valid quantity of transmission periodicities that is indicated by the first parameter.

In the first example, the valid duration is directly indicated, so that processing efficiency of the terminal device is improved, and an initial access delay is reduced. In the second example, the valid quantity of transmission periodicities is indicated, so that there is a complete transmission periodicity within the configured valid duration.

The terminal device performs scheduling-free uplink transmission based on the scheduling-free uplink resource configured by the network device and the valid duration of the scheduling-free uplink resource, to implement uplink enhancement of the terminal device. In this way, after receiving the RRC setup message, the terminal device may send the RRC setup complete message to the network device on the scheduling-free uplink resource within the valid duration, without a process of exchanging signaling/data such as an SR, DCI, a BSR, and UL grant. This reduces signaling overheads, and further increases a system capacity and reduces the initial access delay.

S210 and S220 are described by using only an example in which the terminal device sends the RRC setup complete message on the scheduling-free uplink resource within the valid duration, but should not be construed as any limitation on this application. As described above, the terminal device may perform a capability reporting process and/or a security authentication and verification process on the scheduling-free uplink resource within the valid duration. For example, the terminal device may send at least one of the RRC setup complete message, authentication NAS signaling, a capability reporting message, and security mode signaling on the scheduling-free uplink resource within the valid duration. Refer to FIG. 5. The terminal device may sequentially send at least one of the RRC setup complete message (for example, S220), the authentication NAS signaling (for example, S310), the capability reporting message (for example, S320), and the security mode signaling (for example, S330) on the scheduling-free uplink resource within the valid duration, until the valid duration expires. It may be understood that, between S210 and S330 of the communication method 300, downlink authentication NAS signaling, downlink security mode signaling, a downlink capability query request, and the like that are not shown in FIG. 5 may be further included. For brevity of description, details are not described herein again.

Optionally, the RRC setup message sent by the network device may further include second information. The second information indicates uplink information sent by the terminal device on the scheduling-free uplink resource within the valid duration, for example, may indicate send the RRC setup complete message and the authentication NAS signaling sent by the terminal device on the scheduling-free uplink resource within the valid duration.

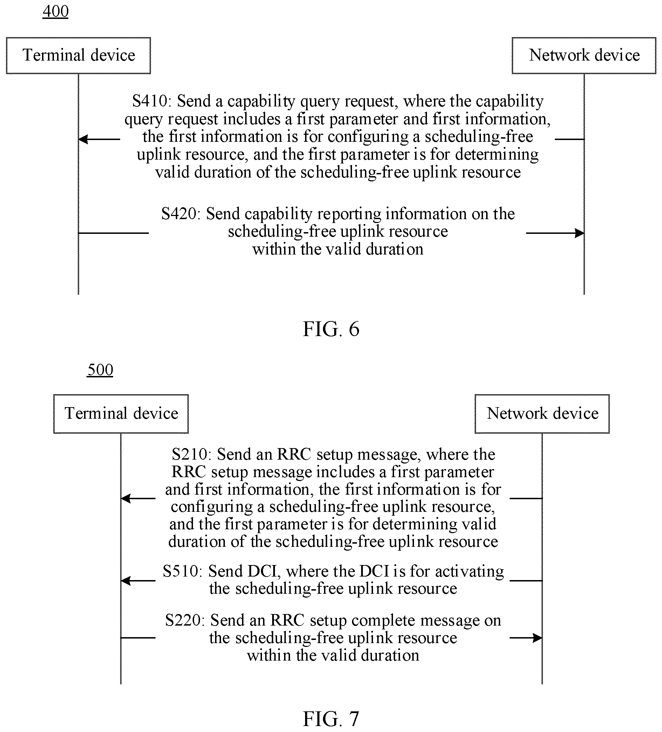

When the network device needs to configure the terminal device to send the capability reporting information on the scheduling-free uplink resource within the valid duration, the network device may configure scheduling-free transmission of the capability reporting information by using the RRC setup message, or may configure scheduling-free transmission of the capability reporting information by using the capability query request. Refer to a communication method 400 shown in FIG. 6. The communication method 400 includes the following S410 and S420.

S410: A network device sends a capability query request to a terminal device, where the capability query request includes a first parameter and first information, the first information is for configuring a scheduling-free uplink resource, and the first parameter is for determining valid duration of the scheduling-free uplink resource.

Correspondingly, the terminal device receives the capability query request from the network device.

S420: The terminal device sends capability reporting information to the network device on the scheduling-free uplink resource within the valid duration.

Correspondingly, the network device receives the capability reporting information from the terminal device on the scheduling-free uplink resource within the valid duration.

In S410, the capability query request carries the first parameter and the first information, so that the terminal device transmits the capability reporting information in a scheduling-free manner. In other words, uplink enhancement of the capability reporting information is implemented. Both the first parameter and the first information are described in the foregoing embodiment, and details are not described herein again.

A capability reporting process is generally later than a random access process and a security authentication and verification process. Therefore, the capability query request sent by the network device generally indicates uplink enhancement of the capability reporting information after the capability query request. For example, in S620, in response to the capability query request sent by the network device, the terminal device sends the capability reporting information to the network device on the scheduling-free uplink resource within the valid duration based on a configuration of the capability query request, without scheduling the uplink resource through a process of exchanging signaling/data such as an SR, DCI, a BSR, or UL grant. This reduces signaling overheads, and further increases a system capacity and reduces an initial access delay.

It should be understood that, in the embodiment shown in FIG. 6, that the first information and the first parameter are carried in the capability query request is merely an example. The first information and the first parameter may alternatively be carried in a newly added physical downlink shared channel (physical downlink shared channel, PDSCH) after the capability query request. In other words, after sending the capability query request to the terminal device, the network device sends the PDSCH carrying the first information and the first parameter to the terminal device.

The capability query request may carry only the first parameter. Optionally, when the capability query request carries the first parameter, the first information may be carried in an RRC setup message.

For ease of understanding, in the following descriptions, that the terminal device sends at least one of an RRC setup complete message, authentication NAS signaling, a capability reporting message, and security mode signaling is described as that the terminal device sends a PUSCH; and information (for example, the RRC setup message or the capability query request) carrying the first information and the first parameter is described as uplink enhancement configuration information.

In any one of the embodiments shown in FIG. 4 to FIG. 6, the terminal device may send the PUSCH to the network device on the scheduling-free uplink resource within the valid duration from a start of the valid duration. Example 1: The start of the valid duration may be physical layer receive time of the uplink enhancement configuration information, or the start of the valid duration may be receive time of a PDSCH carrying the uplink enhancement configuration information. Example 2: The start of the valid duration may be receive time of DCI, or the start of the valid duration may be receive time of a PDCCH carrying the DCI, where the DCI is for activating the scheduling-free uplink resource.

In Example 1, when receiving the uplink enhancement configuration information, the terminal device may start to send the PUSCH to the network device on the scheduling-free uplink resource. The DCI may not be used to trigger the terminal device to send the PUSCH in a scheduling-free manner, reducing the signaling overheads.

In Example 2, when receiving the uplink enhancement configuration information, the terminal device does not start to send the PUSCH in a scheduling-free manner, but sends the PUSCH after the DCI is triggered. In other words, the scheduling-free uplink resource is activated by using the DCI. With reference to FIG. 7, the following describes Example 2 by using an example in which the uplink enhancement configuration information is the RRC setup message, and a PUSCH carries the RRC setup complete message.

A communication method 500 shown in FIG. 7 includes S210, S510, and S220.

In S210, the network device sends the RRC setup message to the terminal device, to implement uplink enhancement configuration for the terminal device by using the first parameter and the first information that are carried in the RRC setup message. It should be understood that, after the terminal device performs uplink enhancement configuration, the scheduling-free uplink resource is not activated, and the terminal device waits for activation of the scheduling-free uplink resource.

In S510, the network device sends the DCI to the terminal device, and the terminal device activates the scheduling-free uplink resource after receiving the DCI. In other words, time at which the DCI is received is used as the start of the valid duration.

In S220, the terminal device uses the receive time of the DCI as the start of the valid duration, and starts to send the RRC setup complete message on the scheduling-free uplink resource within the valid duration.

In Example 2, the scheduling-free uplink resource is activated by using the DCI, to trigger the terminal device to start to send the PUSCH to the network device on the scheduling-free uplink resource within the valid duration. This prevents the terminal device from always starting scheduling-free uplink transmission after receiving the uplink enhancement configuration information, improving transmission control flexibility.

In this embodiment of this application, the terminal device may send the PUSCH on the scheduling-free uplink resource within the valid duration in at least the following two transmission modes:

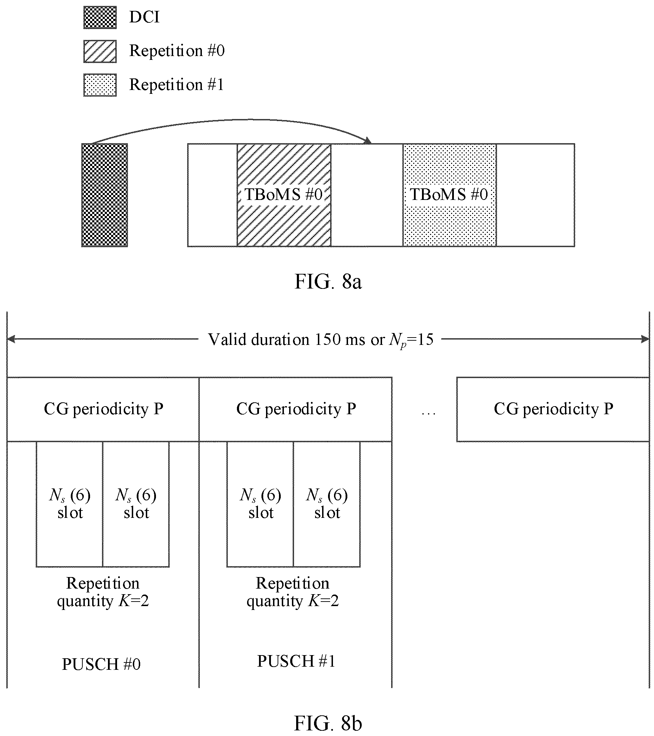

Mode 1: Transmission is performed in a form of a TBoMS. The terminal device may send the PUSCH to the network device one or more times on the scheduling-free uplink resource within the valid duration. Refer to FIG. 8a. After the scheduling-free uplink resource is activated by using the DCI, the terminal device repeatedly sends a TBoMS #0 on the scheduling-free uplink resource within the valid duration, for example, sends a repetition #0 and a repetition #1 of the TBoMS #0. It should be understood that, in this transmission mode, the terminal device does not segment a to-be-transmitted PUSCH at a media access control (media access control, MAC) layer, but sends, in a plurality of slots at a physical layer, a TBoMS corresponding to the PUSCH, or sends a repetition of the PUSCH in a plurality of slots during repeated transmission of the PUSCH.

For example, refer to FIG. 8b. In the uplink enhancement configuration information sent by the network device, the first information indicates that a scheduling-free transmission periodicity of the terminal device is P, a quantity $N_s$ of slots occupied for transmitting the PUSCH in the form of the TBoMS is 6, and a repetition quantity K is 2. For example, a PUSCH #0 occupies 12 slots in a first configured grant (configured grant, CG) periodicity P, and a PUSCH #1 occupies 12 slots in a second CG periodicity P. In this resource preconfiguration manner, signaling overheads and a transmission delay are reduced. For a user whose time-frequency resources required for PUSCH transmission are less than the preconfigured 12 slots, all the preconfigured available slots are occupied, so that the current user obtains a coverage improvement gain of reducing a bit rate. Resource multiplexing for a plurality of users requires resource multiplexing in time domain, frequency domain, time-frequency domain, or the like during configuration on a network side.

In an NTN scenario, a configured quantity of slots occupied by PUSCH data is increased. For example, 16, 24, or 32 slots are added. The valid duration may be set to 150 ms, or a valid quantity $N_p$ of transmission periodicities may be set to 15. The foregoing configurations are all examples for description, and an actual value may be different. When the configured valid duration expires, resources are released.

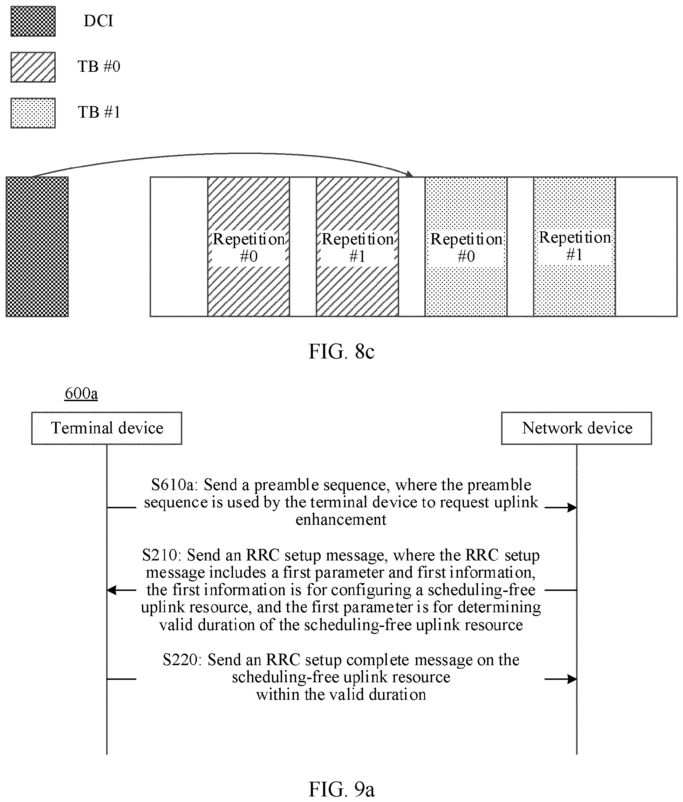

Mode 2: Transmission is performed in a form of a plurality of TBs. The terminal device may send the PUSCH to the network device one or more times on the scheduling-free uplink resource within the valid duration. In this transmission mode, the terminal device may segment a to-be-transmitted PUSCH at a MAC layer, to obtain a plurality of TBs, and transmit, through a physical layer, the plurality of different TBs and one or more repetitions corresponding to each TB. Refer to FIG. 8c. After the scheduling-free uplink resource is activated by using the DCI, the terminal device repeatedly sends a TB #0 and a TB #1 on the scheduling-free uplink resource within the valid duration, including sending a repetition #0 and a repetition #1 of the TB #0, and a repetition #0 and a repetition #1 of the TB #1, where the TB #0 and the TB #1 are obtained by segmenting the PUSCH.

In Mode 2, the plurality of TBs obtained by segmenting the PUSCH may be transmitted in time division on the scheduling-free uplink resource. One TB generally occupies one slot, and at most two TBs may be simultaneously transmitted.

Generally, the PUSCH occupies a plurality of slots. Certainly, a case in which the to-be-transmitted PUSCH occupies one slot or occupies a symbol in one slot is not excluded in this application.

In comparison with Mode 2, in Mode 1, transmission is performed in a form of a TBoMS, and segmentation is not performed at the MAC layer, thereby avoiding increasing overheads of a packet header when the PUSCH is transmitted.

In some embodiments, the network device may perform the uplink enhancement configuration (for example, send the uplink enhancement configuration information) on the terminal device in response to a request or an event of the terminal device, to avoid configuring uplink enhancement for the terminal device when the terminal device does not need uplink enhancement. This embodiment can be implemented based on any one of the embodiments shown in FIG. 4 to FIG. 8. In FIG. 9a to FIG. 9d, an example in which this embodiment is implemented based on FIG. 4 is used. The following provides example descriptions with reference to FIG. 9a to FIG. 9d.

Refer to FIG. 9a. In S610a of a communication method 600a, before the network device sends the RRC setup message to the terminal device, the terminal device sends a preamble sequence (preamble) to the network device. The preamble sequence is used by the terminal device to request uplink enhancement. For example, the network device may preconfigure two groups of preamble sequences for the terminal device, for example, a preamble sequence group A and a preamble sequence group B. A preamble sequence in the preamble sequence group A indicates that the terminal device does not request uplink enhancement, and a preamble sequence in the preamble sequence group B indicates that the terminal device requests uplink enhancement. The terminal device selects a preamble sequence from the preamble sequence group B and sends the preamble sequence to the network device, to indicate that the terminal device requests uplink enhancement.

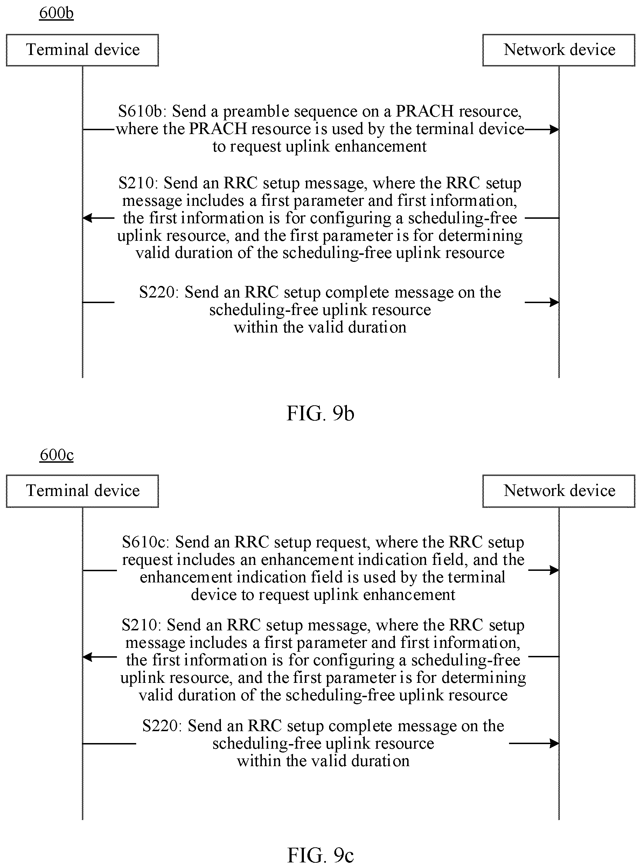

Refer to FIG. 9b. In S610b of a communication method 600b, before the network device sends the RRC setup message to the terminal device, the terminal device sends a preamble sequence to the network device on a PRACH resource. Different from S610a, in S610b, the PRACH resource instead of the preamble sequence indicates that the terminal device requests uplink enhancement. For example, a PRACH resource is predefined or preconfigured. When the terminal device sends the preamble sequence on the PRACH resource, it indicates that the terminal device requests uplink enhancement; and when the terminal device sends the preamble sequence via another PRACH resource, it indicates that the terminal device does not request uplink enhancement. Alternatively, a PRACH resource #0 and a PRACH resource #1 are predefined or preconfigured. When the terminal device sends the preamble sequence on the PRACH resource #0, it indicates that the terminal device requests uplink enhancement; and when the terminal device sends the preamble sequence via the PRACH resource #1, it indicates that the terminal device does not request uplink enhancement.

The PRACH resource may be a time-frequency resource determined based on an access occasion (Rach Occasion, RO), or the PRACH resource is a time-frequency resource corresponding to the RO.

Refer to FIG. 9c. In S610c of a communication method 600c, before the network device sends the RRC setup message to the terminal device, the terminal device sends an RRC setup request to the network device on a PRACH resource. The RRC setup request includes an enhancement indication field, and the enhancement indication field is used by the terminal device to request uplink enhancement.

Optionally, the enhancement indication field may be a newly added bit in the RRC setup request. For example, an uplink configuration grant valid (Uplink Config Grant Valid) field is added to the RRC setup request. Alternatively, the enhancement field may be a new definition of a spare (spare) field in an existing RRC setup request.

For example, when a newly added field (for example, UplinkConfigGrantValid) or a spare field, for example, an enhancement field, in the RRC setup message sent by the terminal device is equal to 1, it indicates that the terminal device requests uplink enhancement. For another example, when the enhancement field is equal to 0, it indicates that the terminal device does not request uplink enhancement. Alternatively, when the newly added field (for example, UplinkConfigGrantValid) or the spare field in the RRC setup message is equal to 0, it indicates that the terminal device requests uplink enhancement; and when the newly added field or the spare field is equal to 1, it indicates that the terminal device does not request uplink enhancement. Certainly, the newly added field (for example, UplinkConfigGrantValid) or the spare field in the RRC setup message sent by the terminal device may alternatively indicate, by another value, that the terminal device requests or does not request uplink enhancement. This is not limited in this application.

In addition to the embodiments shown in FIG. 9a to FIG. 9c, the foregoing uplink enhancement configuration information may alternatively be newly added signaling. The newly added signaling may include the first information and the first parameter, or the newly added signaling may include the first parameter. Optionally, when the newly added signaling includes the first parameter, the first information may be carried in the RRC setup message.

For any one of the examples shown in FIG. 9a to FIG. 9c, the terminal device may determine, based on a network environment or a transmission capability of the terminal device, whether to request uplink enhancement. For example, the terminal device may measure a reference signal received power (reference signal received power, RSRP), and determine, based on a measured value of the RSRP, whether to request uplink enhancement. For example, when the value of the RSRP is less than a threshold, the terminal device requests uplink enhancement, to improve transmission quality; or when the value of the RSRP is greater than the threshold, the terminal device does not request uplink enhancement.

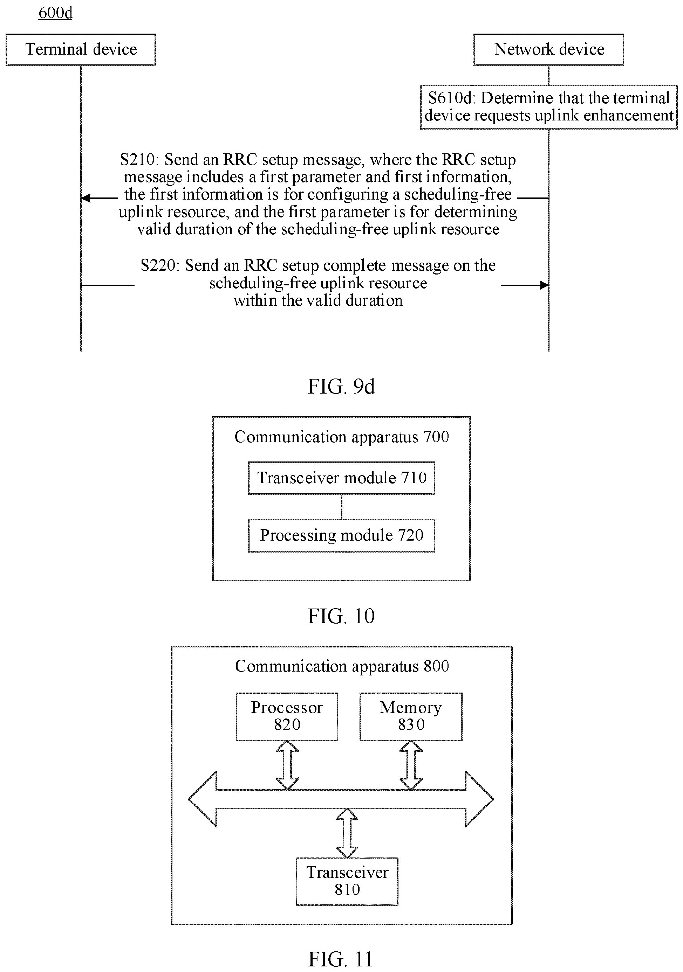

Refer to FIG. 9d. In 610d of a communication method 600d, the network device may determine, based on at least one of the following, that the terminal device requests uplink enhancement:

an uplink enhancement request of an RRC setup request; and
uplink enhancement transmission of the RRC setup request.

Generally, load of the RRC setup request is less than load of the RRC setup complete message. Therefore, in a case in which uplink enhancement is performed on the RRC setup request, the foregoing PUSCH (for example, carrying the RRC setup complete message, the capability reporting information, and the like) also needs uplink enhancement. Therefore, an uplink enhancement request of the PUSCH (for example, carrying the RRC setup complete message, the capability reporting information, and the like) is bound to the uplink enhancement request of the RRC setup request; or the uplink enhancement request of the PUSCH (for example, carrying the RRC setup complete message, the capability reporting information, and the like) is bound to the uplink enhancement transmission of the RRC setup request.

In an example, there is an uplink enhancement request corresponding to the RRC setup request. To be specific, when the terminal device has requested uplink enhancement for the RRC setup request, the network device may determine that the terminal device requests uplink enhancement for the PUSCH (for example, carrying the RRC setup complete message, the capability reporting information, and the like).

In another example, the network device configures uplink enhancement for the terminal device for the RRC setup request. In this case, the network device determines that the terminal device requests uplink enhancement for the PUSCH (for example, carrying the RRC setup complete message, the capability reporting information, and the like).

In still another example, in a case in which the terminal device sends the RRC setup request to the network device in an uplink enhancement manner, the network device may determine that the terminal device requests uplink enhancement for the PUSCH (for example, carrying the RRC setup complete message, the capability reporting information, and the like).

Therefore, in embodiments of this application, the network device and the terminal device transmit the RRC setup complete message on the scheduling-free uplink resource within the valid duration, implementing scheduling-free transmission in an initial access phase, reducing signaling overheads, and reducing an initial access delay.

The foregoing describes the methods provided in embodiments of this application in detail with reference to FIG. 4 to FIG. 9. The following describes an apparatus provided in embodiments of this application in detail with reference to FIG. 10 and FIG. 11.

FIG. 10 is a block diagram of a communication apparatus according to an embodiment of this application. As shown in FIG. 10, the apparatus 700 may include: a transceiver module 710 and a processing module 720.

Optionally, the communication apparatus 700 may correspond to the terminal device in the foregoing method embodiments, for example, may be the terminal device, or a component (for example, a chip or a chip system) disposed in the terminal device.

It should be understood that the communication apparatus 700 may include units that perform the methods on the terminal device side in the method 200 shown in FIG. 4, the method 300 shown in FIG. 5, the method 400 shown in FIG. 6, the method 500 shown in FIG. 7, the method 600a shown in FIG. 9a, the method 600b shown in FIG. 9b, the method 600c shown in FIG. 9c, and the method 600d shown in FIG. 9d in embodiments of this application. In addition, the units in the communication apparatus 700 and the foregoing other operations and/or functions are respectively used to implement corresponding procedures of the methods.

When the communication apparatus 700 is configured to perform a method on a terminal side, the transceiver module 710 may be configured to receive a radio resource control RRC setup message from a network device, where the RRC setup message includes a first parameter and first information, the first information is for configuring a scheduling-free uplink resource, and the first parameter is for determining valid duration of the scheduling-free uplink resource; the processing module 720 may be configured to determine the valid duration and the scheduling-free uplink resource; and the transceiver module 710 is further configured to send an RRC setup complete message to the network device on the scheduling-free uplink resource within the valid duration.

It should be understood that a specific process performed by each unit is described in detail in the foregoing method embodiments. For brevity, details are not described herein again.

Optionally, the communication apparatus 700 may correspond to the network device (for example, the satellite 150 in FIG. 1) in the foregoing method embodiments, for example, may be the network device, or a component (for example, a chip or a chip system) disposed in the network device.

It should be understood that the communication apparatus 700 may include units that perform the methods on the network side in the method 200 shown in FIG. 4, the method 300 shown in FIG. 5, the method 400 shown in FIG. 6, the method 500 shown in FIG. 7, the method 600a shown in FIG. 9a, the method 600b shown in FIG. 9b, the method 600c shown in FIG. 9c, and the method 600d shown in FIG. 9d in embodiments of this application. In addition, the units in the communication apparatus 700 and the foregoing other operations and/or functions are respectively used to implement corresponding procedures of the methods.

When the communication apparatus 700 is configured to perform a method on a network side, the processing module 720 may be configured to determine a first parameter and first information; the transceiver module 710 may be configured to send an RRC setup message to a terminal device, where the RRC setup message includes the first parameter and the first information, the first information is for configuring a scheduling-free uplink resource, and the first parameter is for determining valid duration of the scheduling-free uplink resource; and the transceiver module 710 is further configured to receive an RRC setup complete message from the terminal device on the scheduling-free uplink resource within the valid duration.

It should be understood that a specific process performed by each unit is described in detail in the foregoing method embodiments. For brevity, details are not described herein again.

When the communication apparatus 700 is a terminal device, the transceiver unit 710 in the communication apparatus 700 may be implemented by using a transceiver, for example, may correspond to a transceiver 810 in a communication apparatus 800 shown in FIG. 11. The processing unit 720 in the communication apparatus 700 may be implemented by using at least one processor, for example, may correspond to a processor 820 in the communication apparatus 800 shown in FIG. 11.

When the communication apparatus 700 is a network device, the transceiver unit 710 in the communication apparatus 700 may be implemented by using a transceiver, for example, may correspond to the transceiver 810 in the communication apparatus 800 shown in FIG. 11. The processing unit 720 in the communication apparatus 700 may be implemented by using at least one processor, for example, may correspond to the processor 820 in the communication apparatus 800 shown in FIG. 11.

When the communication apparatus 700 is a chip or a chip system configured in a communication device (for example, a terminal device or a network device), the transceiver unit 710 in the communication apparatus 700 may be implemented by using an input/output interface, a circuit, or the like; and the processing unit 720 in the communication apparatus 700 may be implemented by using a processor, a microprocessor, an integrated circuit, or the like integrated in the chip or the chip system.

FIG. 11 is another block diagram of a communication apparatus according to an embodiment of this application. As shown in FIG. 11, the communication apparatus 800 may include: a transceiver 810, a processor 820, and a memory 830. The transceiver 810, the processor 820, and the memory 830 communicate with each other through an internal connection channel. The memory 830 is configured to store instructions. The processor 820 is configured to execute the instructions stored in the memory 830, to control the transceiver 810 to send a signal and/or receive a signal.

It should be understood that the communication apparatus 800 may correspond to the terminal device or the network device in the foregoing method embodiments, and may be configured to perform steps and/or procedures performed by the terminal device or the network device in the foregoing method embodiments. Optionally, the memory 830 may include a read-only memory and a random access memory, and provide instructions and data to the processor. A part of the memory may further include a non-volatile random access memory. The memory 830 may be an independent component, or may be integrated into the processor 820. The processor 820 may be configured to execute the instructions stored in the memory 830. When the processor 820 executes the instructions stored in the memory, the processor 820 is configured to perform the steps and/or procedures corresponding to the terminal device or the network device in the foregoing method embodiments.

Optionally, the communication apparatus 800 is the terminal device in the foregoing embodiments.

Optionally, the communication apparatus 800 is the network device in the foregoing embodiments.

The transceiver 810 may include a transmitter and a receiver. The transceiver 810 may further include an antenna. There may be one or more antennas. The processor 820, the memory 830, and the transceiver 810 may be components integrated into different chips. For example, the processor 820 and the memory 830 may be integrated into a baseband chip, and the transceiver 810 may be integrated into a radio frequency chip. The processor 820, the memory 830, and the transceiver 810 may alternatively be components integrated into a same chip. This is not limited in this application.

Optionally, the communication apparatus 800 is a component configured in the terminal device, for example, a chip or a chip system.

Optionally, the communication apparatus 800 is a component configured in the network device, for example, a chip or a chip system.

The transceiver 8100 may alternatively be a communication interface, for example, an input/output interface or a circuit. The transceiver 810, the processor 820, and the memory 830 may be all integrated into a same chip, for example, integrated into a baseband chip.

This application further provides a processing apparatus, including at least one processor. The at least one processor is configured to execute a computer program stored in a memory, to enable the processing apparatus to perform the method performed by the terminal device or the network device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, to enable the processing apparatus to perform the method performed by the terminal device or the network device in the foregoing method embodiments.

An embodiment of this application further provides a processing apparatus, including a processor and a memory. The memory is configured to store a computer program, and the processor is configured to invoke the computer program from the memory and run the computer program, to enable the processing apparatus to perform the method performed by the terminal device or the network device in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps in the foregoing methods can be implemented by using a hardware integrated logical circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in this embodiment of this application may be an integrated circuit chip, and has a signal processing capability. In an implementation process, the steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor can implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes, but is not limited to, these memories and any memory of another proper type.

Based on the method provided in embodiments of this application, this application further provides a computer program product. The computer program product includes computer program code. When the computer program code is run on a computer, the computer is enabled to perform the method performed by the terminal device or the network device in the foregoing method embodiments.

Based on the method provided in embodiments of this application, this application further provides a computer-readable storage medium. The computer-readable storage medium stores program code. When the program code is run on a computer, the computer is enabled to perform the method performed by the terminal device or the network device in the foregoing method embodiments.

Based on the method provided in embodiments of this application, this application further provides a communication system. The communication system may include the terminal device and the network device described above.

Terms such as "component", "module", and "system" used in this specification represent computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

receiving, by a terminal device, a radio resource control RRC setup message from a network device, wherein the RRC setup message comprises a first parameter and first information, the first information is for configuring a scheduling-free uplink resource, and the first parameter is for determining valid duration of the scheduling-free uplink resource; and

sending, by the terminal device, an RRC setup complete message to the network device on the scheduling-free uplink resource within the valid duration.

2. The method according to claim 1, wherein the network device is accessed via the RRC setup complete message, and the method further comprises:
performing, by the terminal device, one or a combination of the following on the scheduling-free uplink resource within the valid duration:

a capability reporting process; and
a security authentication and verification process.

3. The method according to claim 1 or 2, wherein the first parameter comprises the valid duration.

4. The method according to claim 1 or 2, wherein the first information comprises a transmission periodicity of the scheduling-free uplink resource, and the first parameter comprises a valid quantity of transmission periodicities.

5. The method according to any one of claims 1 to 4, wherein before the receiving, by a terminal device, an RRC setup message from a network device, the method further comprises:
sending, by the terminal device, a preamble sequence to the network device, wherein the preamble sequence is used by the terminal device to request uplink enhancement.

6. The method according to any one of claims 1 to 4, wherein before the receiving, by a terminal device, an RRC setup message from a network device, the method further comprises:
sending, by the terminal device, a preamble sequence to the network device on a physical random access channel PRACH resource, wherein the PRACH resource is used by the terminal device to request uplink enhancement.

7. The method according to any one of claims 1 to 4, wherein before the receiving, by a terminal device, an RRC setup message from a network device, the method further comprises:
sending, by the terminal device, an RRC setup request to the network device, wherein the RRC setup request comprises an enhancement indication field, and the enhancement indication field is used by the terminal device to request uplink enhancement.

8. The method according to any one of claims 1 to 7, wherein the sending, by the terminal device, an RRC setup complete message to the network device on the scheduling-free uplink resource within the valid duration comprises:

sending, by the terminal device, the RRC setup complete message to the network device on the scheduling-free uplink resource within the valid duration from a start of the valid duration, wherein
the start of the valid duration is physical layer receive time of the RRC setup message; or the start of the valid duration is receive time of downlink control information DCI, and the DCI is for activating the scheduling-free uplink resource.

9. The method according to any one of claims 1 to 8, wherein the RRC setup complete message is transmitted in a form of a transport block processing over multiple slots TBoMS, and the sending, by the terminal device, an RRC setup complete message to the network device on the scheduling-free uplink resource within the valid duration comprises:
sending, by the terminal device, the RRC setup complete message to the network device one or more times on the scheduling-free uplink resource within the valid duration.

10. The method according to any one of claims 1 to 8, wherein the RRC setup complete message is segmented at a media access control MAC layer to obtain a plurality of TBs, and is transmitted in a form of the plurality of TBs; and the sending, by the terminal device, an RRC setup complete message to the network device on the scheduling-free uplink resource within the valid duration comprises:
sending, by the terminal device, the RRC setup complete message to the network device one or more times on the scheduling-free uplink resource within the valid duration.

11. A communication method, wherein the method comprises:

sending, by a network device, an RRC setup message to a terminal device, wherein the RRC setup message comprises a first parameter and first information, the first information is for configuring a scheduling-free uplink resource, and the first parameter is for determining valid duration of the scheduling-free uplink resource; and
receiving, by the network device, an RRC setup complete message from the terminal device on the scheduling-free uplink resource within the valid duration.

12. The method according to claim 11, wherein access by the terminal device is enabled via the RRC setup complete message, and the method further comprises:

performing, by the network device, one or a combination of the following on the scheduling-free uplink resource within the valid duration:

a capability reporting process; and
a security authentication and verification process.

13. The method according to claim 11 or 12, wherein the first parameter comprises the valid duration.

14. The method according to claim 11 or 12, wherein the first information comprises a transmission periodicity of the scheduling-free uplink resource, and the first parameter comprises a valid quantity of transmission periodicities.

15. The method according to any one of claims 11 to 14, wherein before the sending, by a network device, an RRC setup message to a terminal device, the method further comprises:
receiving, by the network device, a preamble sequence from the terminal device, wherein the preamble sequence is used by the terminal device to request uplink enhancement.

16. The method according to any one of claims 11 to 14, wherein before the sending, by a network device, an RRC setup message to a terminal device, the method further comprises:
receiving, by the network device, a preamble sequence from the terminal device on a PRACH resource, wherein the PRACH resource is used by the terminal device to request uplink enhancement.

17. The method according to any one of claims 11 to 14, wherein before the sending, by a network device, an RRC setup message to a terminal device, the method further comprises:
receiving, by the network device, an RRC setup request from the terminal device, wherein the RRC setup request comprises an enhancement indication field, and the enhancement indication field is used by the terminal device to request uplink enhancement.

18. The method according to any one of claims 11 to 14, wherein before the sending, by a network device, an RRC setup message to a terminal device, the method further comprises:
determining, by the network device based on at least one of the following, that the terminal device requests uplink enhancement:

an uplink enhancement request of an RRC setup request; and
uplink enhancement transmission of the RRC setup request.

19. The method according to any one of claims 11 to 18, wherein the receiving, by the network device, an RRC setup complete message from the terminal device on the scheduling-free uplink resource within the valid duration comprises:

receiving, by the network device, the RRC setup complete message from the terminal device on the scheduling-free uplink resource within the valid duration from a start of the valid duration, wherein
the start of the valid duration is physical layer receive time of the RRC setup message; or the start of the valid duration is receive time of DCI, and the DCI is for activating the scheduling-free uplink resource.

20. The method according to any one of claims 11 to 19, wherein the RRC setup complete message is transmitted in a form of a TBoMS, and the receiving, by the network device, an RRC setup complete message from the terminal device on the scheduling-free uplink resource within the valid duration comprises:
receiving, by the network device on the scheduling-free uplink resource within the valid duration, the RRC setup complete message sent by the terminal device one or more times.

21. The method according to any one of claims 11 to 19, wherein the RRC setup complete message is segmented at a media access control MAC layer to obtain a plurality of TBs, and is transmitted in a form of the plurality of TBs; and the receiving, by the network device, an RRC setup complete message from the terminal device on the scheduling-free uplink resource within the valid duration comprises:
receiving, by the network device on the scheduling-free uplink resource within the valid duration, the RRC setup complete message sent by the terminal device one or more times.

22. A communication method, wherein the method comprises:

receiving, by a terminal device, a capability query request from a network device, wherein the capability query request comprises a first parameter and first information, the first information is for configuring a scheduling-free uplink resource, and the first parameter is for determining valid duration of the scheduling-free uplink resource; and
sending, by the terminal device, capability reporting information to the network device on the scheduling-free uplink resource within the valid duration.

23. The method according to claim 22, wherein the first parameter comprises the valid duration.

24. The method according to claim 22, wherein the first information comprises a transmission periodicity of the scheduling-free uplink resource, and the first parameter comprises a valid quantity of transmission periodicities of the scheduling-free uplink resource.

25. A communication method, wherein the method comprises:

sending, by a network device, a capability query request to a terminal device, wherein the capability query request comprises a first parameter and first information, the first information is for configuring a scheduling-free uplink resource, and the first parameter is for determining valid duration of the scheduling-free uplink resource; and

receiving, by the network device, capability reporting information from the terminal device on the scheduling-free uplink resource within the valid duration.

26. The method according to claim 25, wherein the first parameter comprises the valid duration.

27. The method according to claim 25, wherein the first information comprises a transmission periodicity of the scheduling-free uplink resource, and the first parameter comprises a valid quantity of transmission periodicities of the scheduling-free uplink resource.

28. A communication apparatus, comprising modules configured to perform the method according to any one of claims 1 to 10 and 22 to 24, or comprising modules configured to perform the method according to any one of claims 11 to 21 and 25 to 27.

29. A communication device, comprising: a processor and a memory, wherein the memory is configured to store a computer program, and the processor is configured to invoke and run the computer program stored in the memory, to perform the method according to any one of claims 1 to 27.

30. A chip, comprising a processor, configured to invoke computer instructions from a memory and run the computer instructions, to enable a device in which the chip is installed to perform the method according to any one of claims 1 to 27.

31. A computer-readable storage medium, configured to store computer program instructions, wherein the computer program enables a computer to perform the method according to any one of claims 1 to 27.

32. A computer program product, comprising computer program instructions, wherein the computer program instructions enable a computer to perform the method according to any one of claims 1 to 27.

100

FIG. 1

FIG. 2

FIG. 3

EP 4 564 962 A1

200

| Terminal device | | Network device |

S210: Send an RRC setup message, where the RRC setup message includes a first parameter and first information, the first information is for configuring a scheduling-free uplink resource, and the first parameter is for determining valid duration of the scheduling-free uplink resource

S220: Send an RRC setup complete message on the scheduling-free uplink resource within the valid duration

FIG. 4

300

| Terminal device | | Network device |

S210: Send an RRC setup message, where the RRC setup message includes a first parameter and first information, the first information is for configuring a scheduling-free uplink resource, and the first parameter is for determining valid duration of the scheduling-free uplink resource

S220: Send an RRC setup complete message on the scheduling-free uplink resource within the valid duration

S310: Send authentication NAS signaling on the scheduling-free uplink resource within the valid duration

S320: Send security mode signaling on the scheduling-free uplink resource within the valid duration

S330: Send capability reporting information on the scheduling-free uplink resource within the valid duration

FIG. 5

400

| Terminal device | | Network device |

S410: Send a capability query request, where the capability query request includes a first parameter and first information, the first information is for configuring a scheduling-free uplink resource, and the first parameter is for determining valid duration of the scheduling-free uplink resource

S420: Send capability reporting information on the scheduling-free uplink resource within the valid duration

FIG. 6

500

| Terminal device | | Network device |

S210: Send an RRC setup message, where the RRC setup message includes a first parameter and first information, the first information is for configuring a scheduling-free uplink resource, and the first parameter is for determining valid duration of the scheduling-free uplink resource

S510: Send DCI, where the DCI is for activating the scheduling-free uplink resource

S220: Send an RRC setup complete message on the scheduling-free uplink resource within the valid duration

FIG. 7

DCI

Repetition #0

Repetition #1

TBoMS #0        TBoMS #0

## FIG. 8a

Valid duration 150 ms or $N_p$=15

| CG periodicity P | CG periodicity P | ... | CG periodicity P |

$N_s$ (6) slot  $N_s$ (6) slot          $N_s$ (6) slot  $N_s$ (6) slot

Repetition quantity $K$=2

Repetition quantity $K$=2

PUSCH #0

PUSCH #1

## FIG. 8b

DCI

TB #0

TB #1

| Repetition #0 | Repetition #1 | Repetition #0 | Repetition #1 |

FIG. 8c

600a

| Terminal device | Network device |

S610a: Send a preamble sequence, where the preamble sequence is used by the terminal device to request uplink enhancement

S210: Send an RRC setup message, where the RRC setup message includes a first parameter and first information, the first information is for configuring a scheduling-free uplink resource, and the first parameter is for determining valid duration of the scheduling-free uplink resource

S220: Send an RRC setup complete message on the scheduling-free uplink resource within the valid duration

FIG. 9a

600b

| Terminal device | | Network device |

S610b: Send a preamble sequence on a PRACH resource,
where the PRACH resource is used by the terminal device
to request uplink enhancement

S210: Send an RRC setup message, where the RRC setup
message includes a first parameter and first information,
the first information is for configuring a scheduling-free
uplink resource, and the first parameter is for determining
valid duration of the scheduling-free uplink resource

S220: Send an RRC setup complete message on the
scheduling-free uplink resource
within the valid duration

FIG. 9b

600c

| Terminal device | | Network device |

S610c: Send an RRC setup request, where the RRC setup
request includes an enhancement indication field, and the
enhancement indication field is used by the terminal
device to request uplink enhancement

S210: Send an RRC setup message, where the RRC setup
message includes a first parameter and first information,
the first information is for configuring a scheduling-free
uplink resource, and the first parameter is for determining
valid duration of the scheduling-free uplink resource

S220: Send an RRC setup complete message on the
scheduling-free uplink resource
within the valid duration

FIG. 9c

600d

| Terminal device | | Network device |

S610d: Determine that the terminal device requests uplink enhancement

S210: Send an RRC setup message, where the RRC setup message includes a first parameter and first information, the first information is for configuring a scheduling-free uplink resource, and the first parameter is for determining valid duration of the scheduling-free uplink resource

S220: Send an RRC setup complete message on the scheduling-free uplink resource within the valid duration

FIG. 9d

Communication apparatus 700

Transceiver module 710

Processing module 720

FIG. 10

Communication apparatus 800

Processor 820

Memory 830

Transceiver 810

FIG. 11

## INTERNATIONAL SEARCH REPORT

| International application No. |
| --- |
| **PCT/CN2023/094897** |

### A. CLASSIFICATION OF SUBJECT MATTER

H04W 72/04(2023.01)i

According to International Patent Classification (IPC) or to both national classification and IPC

### B. FIELDS SEARCHED

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

DWPI, ENTXT, CNTXT, CJFD, 3GPP: 无线资源控制, 建立, 完成, 免调度, 时长, 时间, 增强, 时隙, 能力, 查询, 请求, RRC, setup, complete, grant-free, time, duration, enhance, slot, capability, inquiry, request

### C. DOCUMENTS CONSIDERED TO BE RELEVANT

| Category* | Citation of document, with indication, where appropriate, of the relevant passages | Relevant to claim No. |
| --- | --- | --- |
| X | CN 109413744 A (HUAWEI TECHNOLOGIES CO., LTD.) 01 March 2019 (2019-03-01) description, paragraphs [0088]-[0303] | 1,3-11, 13-21, 28-32 |
| Y | CN 109413744 A (HUAWEI TECHNOLOGIES CO., LTD.) 01 March 2019 (2019-03-01) description, paragraphs [0088]-[0303] | 2, 12, 22-32 |
| Y | CN 102056221 A (DATANG MOBILE COMMUNICATIONS EQUIPMENT CO., LTD.) 11 May 2011 (2011-05-11) description, paragraphs [0065]-[0075] | 2, 12, 22-32 |
| Y | CN 101651705 A (HUAWEI TECHNOLOGIES CO., LTD.) 17 February 2010 (2010-02-17) description, pages 4-6 | 2, 12, 22-32 |
| A | US 2020029306 A1 (CHEN JINHUI et al.) 23 January 2020 (2020-01-23) entire document | 1-32 |
| A | SIERRA WIRELESS. "Transmission of Data Grant-Free in Inactive State" *3GPP TSG RAN WG2 Meeting #96 R2-168595*, 18 November 2016 (2016-11-18), entire document | 1-32 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 July 2023** | **31 July 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/094897**

| Patent document cited in search report | | | Publication date (day/month/year) | Patent family member(s) | | | Publication date (day/month/year) |
|---|---|---|---|---|---|---|---|
| CN | 109413744 | A | 01 March 2019 | None | | | |
| CN | 102056221 | A | 11 May 2011 | None | | | |
| CN | 101651705 | A | 17 February 2010 | WO | 2010017722 | A1 | 18 February 2010 |
| US | 2020029306 | A1 | 23 January 2020 | CN | 110739988 | A | 31 January 2020 |

Form PCT/ISA/210 (patent family annex) (July 2022)

**REFERENCES CITED IN THE DESCRIPTION**

**Patent documents cited in the description**

- CN 202210916931